# FASCICULE DE BREVET EUROPEEN

(11) **EP 0 561 911 B1**
(45) Date de publication et mention de la délivrance du brevet: **14.06.1995**
(21) Numéro de dépôt: 92900826.6
(22) Date de dépôt: 26.11.1991
(51) Int. Cl.: G01V 1/22, G01V 1/20

(54) **Tronçon pour antenne acoustique linéaire et antenne formée d'un ensemble de tels tronçons**
Linearer akustischer Antennenabschnitt und Antenne, die aus solchen Abschnitten gebildet ist
Section for linear acoustic antenna and antenna formed of an assembly of such sections

(30) Priorité: 11.12.1990 FR 9015474
(43) Date de publication de la demande: 29.09.1993
(73) Titulaire: THOMSON-CSF, 75008 Paris (FR)
(72) Inventeur: BILLET, Daniel, F-92045 Paris-La Défense Cédex 67 (FR); BUCHHOLTZER, Bernard, F-92045 Paris-La Défense Cédex 67 (FR)
(74) Mandataire: Desperrier, Jean-Louis
(86) Numéro de dépôt international: FR9100937
(87) Numéro de publication internationale: WO9210767

(56) Documents cités:
- EP-A- 0 372 908
- FR-A- 2 237 207
- FR-A- 2 237 552
- GB-A- 2 148 501
- US-A- 3 990 036
- US-A- 4 509 170

## Description

La présente invention se rapporte aux antennes acoustiques linéaires constituées d'un ensemble de tronçons, qui sont remorquées derrière un bateau pour recevoir les signaux acoustiques se transmettant dans l'eau, afin par exemple de faire de la recherche pétrolière.

Les antennes acoustiques linéaires couramment utilisées ont la forme extérieure d'un tuyau pouvant atteindre plusieurs centaines de mètres de long. Ce tuyau renferme des capteurs acoustiques, des hydrophones par exemple, dont les signaux sont ramenés par des connexions à bord du bateau tracteur.

Compte tenu de cette longueur il serait très difficile de fabriquer une telle antenne d'un seul tenant et l'on est donc amené à la fabriquer en plusieurs tronçons reliés par des moyens de connexions formant des jonctions.

A titre d'exemple, une telle antenne peut comporter 50 tronçons munis chacun de 50 capteurs. L'ensemble des signaux numérisés provenant de ces capteurs correspond alors à un débit pouvant dépasser les 100 Mégabits/s.

Pour faciliter aussi bien la fabrication que l'utilisation et la maintenance de ces antennes, on vise trois objectifs principaux distincts :

En dehors des capteurs, dont l'emplacement est imposé par des considérations acoustiques, on cherche à minimiser le nombre des éléments contenus dans le tronçon, pour les ramener au niveau des jonctions, afin de pouvoir réparer une panne se situant au niveau d'un tel élément sans avoir à ouvrir le tronçon. Une telle ouverture est toujours très délicate, surtout à bord d'un bateau, parce qu'il faut disposer d'une grande place et que le tronçon est en outre rempli d'huile que l'on doit vidanger puis remettre en place après la réparation.

Pour minimiser les problèmes dus à l'usure non uniforme des tronçons on cherche à ce que tous les tronçons, au tout au moins le plus grand nombre d'entre eux, soient interchangeables et de préférence identiques.

Enfin l'antenne lorsqu'elle est assemblée doit être le plus homogène possible dans sa longueur, aussi bien en poids qu'en densité, de manière à être aussi rectiligne que possible lorsqu'elle est remorquée, afin de minimiser le bruit acoustique lequel est d'autant plus fort que les ondulations de l'antenne génèrent des remous.

Les architectures actuellement utilisées pour de telles antennes ne permettent pas d'atteindre correctement ces objectifs.

En particulier la demande de brevet européen EP-A-0372908 décrit une antenne formée de tronçons dans lesquels la structure des connecteurs d'extrémité est identique d'un tronçon à l'autre, ce qui permet une certaine interchangeabilité. Toutefois, on utilise une voie de transmission des données pour chaque tronçon, ce qui amène à avoir un nombre de connexions relativement important en parallèle. En outre le nombre de voies ainsi déterminé fige le nombre de tronçons de l'antenne (cinq dans l'exemple décrit) et donc sa longueur.

Par ailleurs la demande de brevet britannique GB-A-2 148 501 décrit une antenne formée de tronçons dans laquelle les données remontent vers le bateau remorqueur également par un ensemble de voies de transmissions. En outre une fréquence de synchronisation est envoyée depuis le bateau vers un tronçon de queue spécialisé où elle déclenche l'émission en retour vers les tronçons successifs une trame d'acquisition de signaux de données.

Pour améliorer cette situation, l'invention propose un tronçon pour antenne acoustique linéaire selon la revendication 1.

D'autres particularités et avantages de l'invention apparaîtront clairement dans la description suivante, présentée à titre d'exemple non limitatif, en regard des figures annexées qui représentent :
- la figure 1, le schéma de principe d'une antenne formée de tronçons selon l'invention ;
- la figure 2, le schéma-bloc d'un tronçon ;
- la figure 3, le schéma d'un module MCD de la fig. 2 ;
- la figure 4, le schéma des multiplexeurs MUX1 et MUX2 de la figure 2 ; et
- la figure 5, le diagramme des temps de la transmission sur la liaison à haut débit de la figure 2.

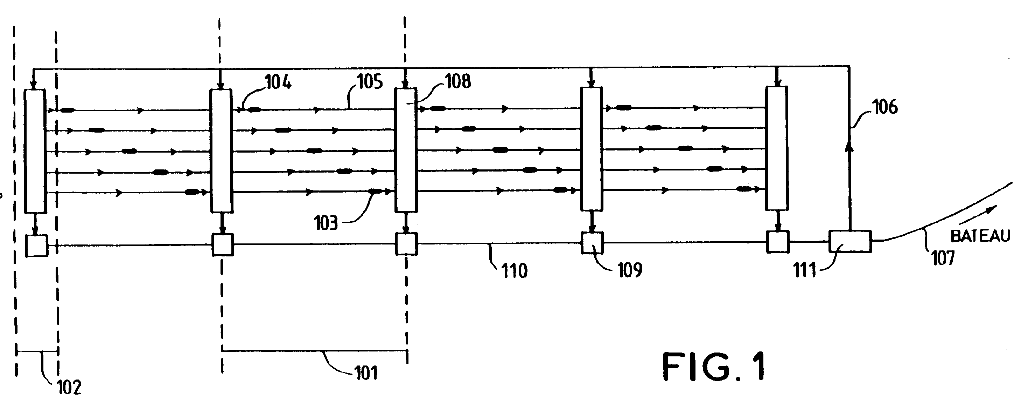

On a représenté schématiquement sur la figure 1 la structure générale d'une antenne acoustique linéaire formée dans cet exemple de quatre tronçons.

Ces tronçons tels que 101, sont formés d'enveloppes réunies par des jonctions telles que 102. Il faut bien comprendre qu'une jonction désigne dans ce texte l'ensemble des organes appartenant aux deux extrémités des tronçons réunis et qui permettent justement de les réunir. Une jonction est donc formée de deux demi-jonctions appartenant respectivement aux deux tronçons réunis par la jonction.

Ainsi donc, un tronçon comprend l'ensemble des organes situés entre les traits pointillés délimités par la référence 101, et une jonction l'ensemble des organes situés entre les pointillés délimités par la référence 102.

Répartis le long du tronçon à l'intérieur de celui-ci on trouve un ensemble de modules 103 comportant chacun un ou deux hydrophones selon le mode de réalisation. Chacun de ces modules reçoit par une connexion d'entrée 104 un signal de synchronisation provenant de la jonction située côté aval du tronçon, c'est-à-dire du côté arrière par rapport au sens de traction. Le module émet sur une connexion 105 les signaux de données provenant du traitement des signaux captés par les hydrophones. Cette connexion 105 se dirige vers la jonction située du côté amont du tronçon c'est-à-dire en avant par rapport au sens de traction.

Le signal de synchronisation traverse l'ensemble de l'antenne par une connexion 106 qui arrive du bateau par l'intermédiaire du câble-tracteur 107. En queue de l'antenne il est rebouclé dans la demi-jonction aval du dernier tronçon pour remonter ensuite de tronçon en tronçon vers la tête de l'antenne. Au passage il distribue des signaux de télécommande aux demi-jonctions amont.

Les connexions 105 sont appliquées à un multiplexeur 108 situé dans les demi-jonctions amonts. Ce multiplexeur transmet les données après multiplexage à un deuxième multiplexeur 109 permettant d'insérer ces données sur une connexion commune 110 sur laquelle les multiplexeurs 109 sont insérés en série. Cette liaison commune est ramenée vers le bateau par l'intermédiaire du câble de traction 107 et d'un circuit de distribution 111 qui permet de séparer le signal de synchro à injecter sur la connexion 106, des signaux de données arrivant par la connexion 110.

On constate donc qu'il y a, aussi bien dans les tronçons qu'au niveau de l'antenne complète, deux niveaux de circulation de données; un premier niveau à bas débit allant des modules 103 aux multiplexeurs 108, et un niveau haut débit qui rassemble les sorties des multiplexeurs 108 pour aboutir sur le bateau tracteur.

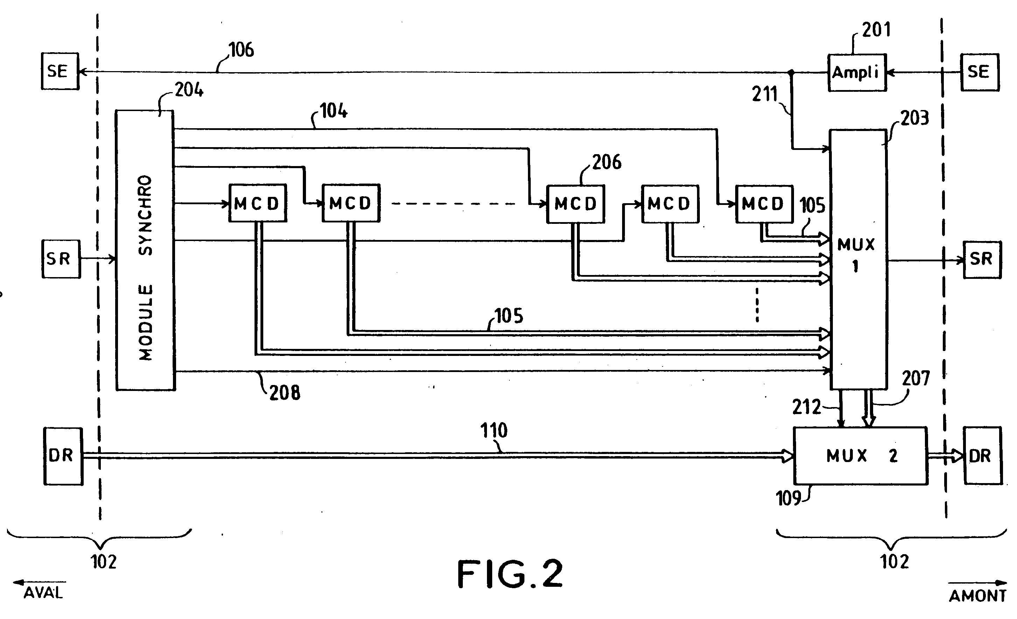

On a représenté sur la figure 2 un schéma plus détaillé d'un tronçon avec à chaque extrémité les éléments de la demi-jonction qui fait partie de ce tronçon. Les blocs SE, SR et DR représentent les reprises des signaux sur les tronçons amont et aval.

Le signal de synchronisation SE arrive du côté amont du tronçon depuis la jonction aval du tronçon précédent. Un amplificateur 201 situé dans la demi-jonction amont le régènère pour alimenter la ligne 106 qui va vers la demi-jonction aval.

Un module de synchronisation 204 permet, selon une technique connue, à partir du signal de synchronisation SR qui remonte depuis la queue de l'antenne de démultiplier celui-ci en un ensemble de signaux d'horloge et de service nécessaire aux organes contenus dans le tronçon.

Ces signaux sont alors appliqués par les connexions 104 à des modules convertisseurs de données (MCD) 206 qui comprennent les hydrophones permettant de recevoir les signaux acoustiques à détecter, et des circuits de traitement et de numérisation qui permettent, sous la commande de ces signaux d'horloge, de délivrer un signal numérisé représentant les signaux acoustiques reçus par les hydrophones. Ces signaux numérisés sont acheminés par les liaisons à bas débit 105 vers un premier multiplexeur MUX1 203 qui permet de les multiplexer pour obtenir un signal numérisé regroupant l'ensemble des signaux numériques provenant des MCD, avec un débit intermédiaire sensiblement égal à n fois le débit des MCD, n étant le nombre de MCD. Le dispositif MUX1 reçoit également les signaux de synchronisation du module 204 et un signal de télécommande de la connexion 106.

Ce signal numérique intermédiaire est appliqué par une liaison 207 à un deuxième multiplexeur MUX2 109 qui reçoit le signal de synchronisation du MUX1 par une liaison 212.

Ce deuxième multiplexeur reçoit par ailleurs par la liaison à haut débit 110 les signaux DR des mêmes multiplexeurs situés dans les tronçons précédents. Il transmet ces signaux aux tronçons amont.

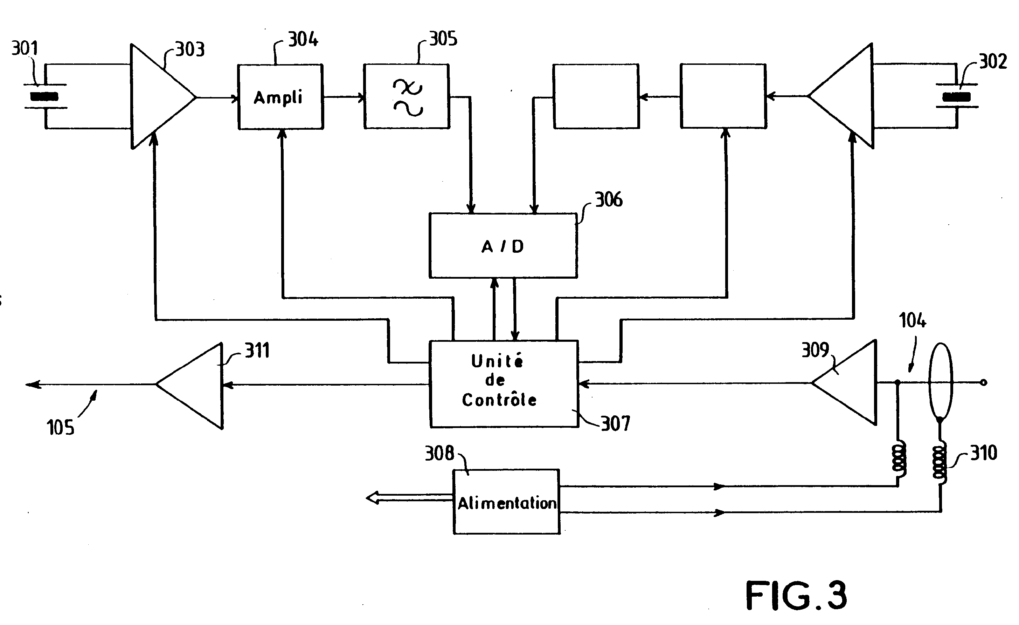

On a représenté sur la figure 3 le schéma d'un module convertisseur de données MCD comportant deux hydrophones 301 et 302.

Ces hydrophones sont reliés chacun à une chaîne d'amplification et de filtrage comportant successivement un préamplificateur 303, un amplificateur 304 et un filtre anti-repliement 305.

Les sorties de ces deux chaînes sont appliquées à un convertisseur analogique/numérique 306 à double voie qui délivre sur sa sortie un signal numérique comportant des échantillons des signaux des hydrophones numérisés et, puisqu'il y en a deux, multiplexés à un premier niveau de multiplexage. c'est-à-dire mise en série deux par deux.

Ce convertisseur 306 fonctionne sous la commande d'une unité de contrôle 307 qui lui adresse les signaux de synchronisation qui lui sont nécessaires. Cette unité de contrôle commande par ailleurs le gain de l'amplificateur 304 et le réglage de la fréquence de coupure FC du préamplificateur 303.

Le cas échéant elle peut aussi envoyer à l'amplicateur 303 des signaux de tests permettant par exemple de normaliser la chaîne d'amplification et de filtrage. Ces différentes fonctions sont déterminées d'une part au niveau de l'unité de contrôle par une logique interne relativement sommaire et d'autre part au niveau de l'ensemble de traitement des signaux situés dans le bateau tracteur qui transmet à cette unité de contrôle par la connexion 104 des signaux de commande destinés par exemple à modifier le gain d'un amplificateur lorsque le signal qu'il délivre, contrôlé au niveau des moyens situés à bord dans le bateau, dépasse certaines limites hautes et basses.

L'unité de contrôle est par exemple réalisée avec un dispositif formé d'un ensemble de portes logiques programmé selon une technique connue, par exemple par rupture de fusibles. Ces dispositifs sont connus dans l'art sous le nom de "gate array" et on sait les programmer de manière à obtenir en sortie les signaux lus en fonction des commandes appliquées en entrée.

Selon une caractéristique de l'invention les MCD sont reliés au module de synchronisation 204 par des câbles coaxiaux 104 qui permettent de transmettre aux MCD le signal de synchronisation comprenant également les signaux de télécommande, et une tension continue permettant d'alimenter un circuit d'alimentation 308 qui fournit l'énergie électrique aux différents organes du MCD. Ce coaxial arrive au niveau du MCD sur un amplificateur 309 qui fonctionne en alternatif et permet donc de séparer la composante continue et d'appliquer à l'unité de contrôle le signal de synchronisation et de télécommande.

La tension continue d'alimentation est prélevée entre l'âme et la gaine du coaxial par des inductances 310 qui permettent d'empêcher la fuite des signaux de synchronisation vers le dispositif d'alimentation 308.

De manière symétrique les signaux de données délivrés par l'unité de contrôle sont appliqués à un amplificateur de puissance 311 qui permet d'alimenter un coaxial 105 transmettant les signaux de données au multiplexeur 203.

Cette disposition utilisant des coaxiaux où transitent plusieurs signaux permet de réduire le diamètre du tronçon.

L'énergie électrique arrive au niveau du module de synchronisation par une ligne bifilaire de puissance non représentée et cette ligne alimente dans ce module un ensemble de diodes Zener connectées en série aux bornes desquelles on prélève les tensions électriques à appliquer aux coaxiaux 104. Des inductances permettent là aussi de la même manière qu'au niveau des MCD de ne pas court-circuiter en alternatif les coaxiaux .

A titre de variante, on pourrait faire transiter l'énergie électrique d'alimentation par les coaxiaux 105 transportant les données vers le premier multiplexeur MUX1. Celui-ci comporterait alors un système semblable à celui décrit plus haut permettant d'alimenter ces coaxiaux par une tension continue.

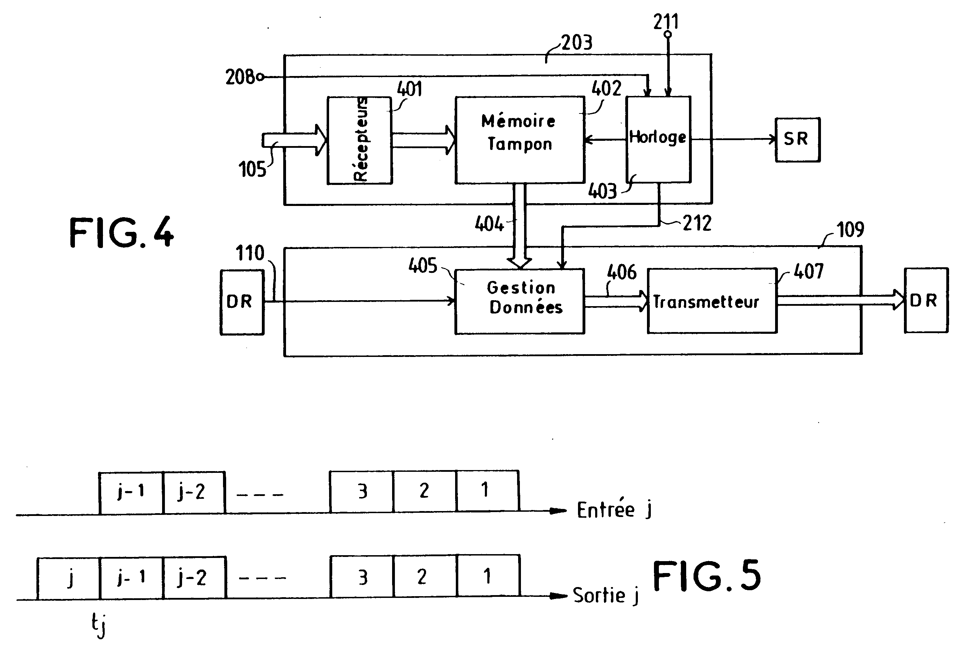

Un schéma plus détaillé des premier et deuxième multiplexeurs 203 et 109 est représenté sur la figure 4.

Les signaux des hydrophones, qui sont tous échantillonnés au même moment et qui ont été mis en série deux par deux dans l'unité de contrôle 307, sont transmis simultanément par l'ensemble des coaxiaux 105 au multiplexeur 203 dans lequel ils sont reçus par un ensemble de récepteurs 401 qui permettent de les mémoriser en parallèle dans un ensemble de registres formant une mémoire tampon 402. Cette mémoire tampon est vidée sous la commande d'un signal d'horloge obtenu dans un circuit de synchronisation 403 à partir du signal provenant du module 204 par la liaison 208.

Le circuit 403 permet également de délivrer le signal de synchronisation SR destiné au tronçon amont. Les échantillons de signal ainsi mémorisés simultanément dans la mémoire tampon 402 sont ensuite transmis les uns après les autres au deuxième multiplexeur 109 par une liaison parallèle 404.

Ce multiplexeur 109 reçoit du tronçon précédent le signal DR à haut débit circulant en série sur la connexion 110 et formé, comme représenté sur la figure 5, d'un ensemble de paquets successifs comportant chacun en série tous les mots numériques correspondant aux échantillons des tronçons précédents. Ces paquets ont été rajoutés les uns après les autres au fur et à mesure du passage dans les deuxièmes multiplexeurs des tronçons, et l'on a donc les paquets 1, 2 ... J-2, J-1 qui se succèdent à l'entrée du deuxième multiplexeur de la jonction J. A la sortie de la jonction J, le paquet de données du tronçon correspondant est rajouté à l'instant tj.

A l'intérieur du deuxième multiplexeur 109, une unité de gestion de données 405 reçoit le signal à haut débit provenant de la liaison 110 et remet sous la forme parallèle les mots représentant les échantillons qui sont situés dans les paquets. Lorsque le dernier mot provenant du paquet J-1 est passé par l'unité de gestion de données, le circuit de synchronisation 403 vide le contenu de la mémoire tampon 402 dans l'unité de gestion 405 par l'intermédiaire de la liaison 404 et cette unité de gestion rajoute le paquet J à la suite des paquets précédents.

Les mots contenus dans ces paquets sont présentés au fur et à mesure par l'unité de gestion 405 à un transmetteur 407 par l'intermédiaire de la liaison parallèle 406.

Ce transmetteur est un circuit de type connu possédant sa propre base de temps et il permet de recevoir les mots successifs des paquets provenant de l'unité de gestion pour les retransmettre en série pour former le signal DR reçu par le tronçon amont. A titre d'exemple on peut utiliser comme transmetteur un circuit fabriqué par la société Advanced Micro Devices et connue sous le nom de "taxi chip".

Selon une caractéristique dé l'invention, on prévoit au niveau du circuit de synchronisation 403 un dispositif tel qu'un registre qui permet de mémoriser en mémoire vive le numéro du tronçon dans l'antenne. Ce dispositif reçoit un signal de la ligne 106 en sortie de l'amplificateur 201 par la liaison 211. Ainsi le circuit de synchronisation 403 connaît l'instant tj où il doit commander l'entrée des données sur la liaison haut débit en faisant vider la mémoire tampon 402 dans l'unité de gestion de données 405.

## Revendications

1. Tronçon pour antenne acoustique linéaire , du type comprenant une enveloppe terminée par ses deux extrémités par une demi-jonction amont et une demi-jonction aval, un ensemble d'hydrophones répartis à l'intérieur de cette enveloppe le long du tronçon, une ligne de transmission (106) pour transmettre entre la demi-jonction amont et la demi-jonction aval un premier signal de synchronisation et de télécommande se dirigeant vers la queue de l'antenne, un module de synchronisation (204) situé dans la demi-jonction pour délivrer un ensemble de signaux de synchronisation internes au tronçon;
- un ensemble de modules de traitement et de numérisation (206) répartis régulièrement à l'intérieur de l'enveloppe sur la longueur du tronçon pour traiter (303-305) et numériser (306) les signaux d'au moins un hydrophone (301) sous la commande de l'un des signaux de synchronisation internes au module,
caractérisé en ce que le module de synchronisation (204) est situé dans le demi-jonction aval pour recevoir du tronçon aval adjacent de l'antenne un deuxième signal de synchronisation remontant depuis la queue de cette antenne, et pour alimenter les organes du tronçon en énergie électrique à partir d'un courant électrique provenant du bateau tracteur par l'intermédiaire de la demi-jonction amont , et en ce que le tronçon comprend en outre :
- un premier multiplexeur (203) situé dans la demi-jonction amont pour multiplexer les signaux numériques (307) délivrés par les modules de traitement et de numérisation (206) et émettre vers le tronçon amont adjacent un signal qui formera le deuxième signal de synchronisation de ce tronçon amont ; et
- un deuxième multiplexeur (109) situé dans la demi-jonction amont pour recevoir du tronçon aval adjacent, sur une liaison unique à haut débit (110), un signal numérique comprenant les signaux numériques des deuxièmes multiplexeurs de tous les tronçons avals, pour ajouter à ce signal les signaux numériques reçus du premier multiplexeur et pour émettre le signal ainsi obtenu vers le tronçon amont.

2. Tronçon selon la revendication 1, caractérisé en ce que les liaisons entre les modules de traitement et de numérisation (206) et respectivement le module de synchronisation (204) et le premier multiplexeur (203) se font avec des câbles coaxiaux.

3. Tronçon selon la revendication 2, caractérisé en ce que l'alimentation des modules de traitement et de numérisation (206), et des multiplexeurs (203, 109), se fait par l'intermédiaire desdits câbles coaxiaux qui supportent les signaux de données et un courant continu d'alimentation.

4. Tronçon selon l'une quelconque des revendications 1 à 3, caractérisé en ce qu'il comprend des moyens (403) pour mémoriser un signal de télécommande transmis par l'intermédiaire de ladite ligne de transmission entre la demi-jonction amont et la demi-jonction aval (106) indiquant le numéro du tronçon dans l'ensemble des tronçons formant l'antenne linéaire, et des moyens (405) pour transmettre les données numérisées provenant du premier multiplexeur (203) sur la liaison à haut débit (110) sous la forme d'un paquet de mots binaires situé à la suite d'un ensemble d'autres parquets de mots binaires (J1-J-1) correspondant à chacun des tronçons avals de l'antenne linéaire.

5. Antenne acoustique linéaire, caractérisée en ce qu'elle est formée d'un ensemble de tronçons (101) selon l'une quelconque des revendications 1 à 4, identiques entre eux et mis bout à bout.

## Patentansprüche

1. Abschnitt für eine lineare akustische Antenne, der eine an ihren beiden Enden mit einem vorderen Halbübergang bzw. einem hinteren Halbübergang abgeschlossene Hülle, eine Gruppe von im Inneren dieser Hülle entlang des Abschnitts verteilten Hydrophonen, eine Übertragungsleitung (106), um zwischen dem vorderen Halbübergang und dem hinteren Halbübergang ein erstes Synchronisations- und Fernsteuerungssignal zu übertragen, das zum hinteren Ende der Antenne läuft, einen Synchronisationsmodul (204) in dem Halbübergang, der eine Gruppe von internen Synchronisationssignalen für den Abschnitt liefert, eine Gruppe von Verarbeitungs- und Digitalisierungsmoduln (206), die gleichmäßig innerhalb der Hülle über die Länge des Abschnitts verteilt sind, um die Signale mindestens eines Hydrophons (301) unter Steuerung durch eines der internen Synchronisationssignale des Moduls zu verarbeiten (303 bis 305) und zu digitalisieren (306),
dadurch gekennzeichnet, daß der Synchronisationsmodul (204) in dem hinteren Halbübergang liegt und von dem endseitig benachbarten Antennenabschnitt ein zweites vom Ende der Antenne kommendes Synchronisationssignal empfängt, das die Organe des Abschnitts mit elektrischer Energie versorgt, die von einem vom Schlepper über den vorderen Halbübergang kommenden elektrischen Strom stammt, und daß der Abschnitt weiter aufweist:
- einen ersten Multiplexer (203), der in dem vorderen Halbübergang sitzt und die digitalen von den Verarbeitungs- und Digitalisierungsmoduln (206) kommenden Signale (307) multiplexiert und zum schlepperseitig benachbarten Abschnitt ein Signal sendet, das das zweite Synchronisationssignal dieses benachbarten Abschnitts bilden wird,
- und einen zweiten Multiplexer (109), der in dem vorderen Halbübergang sitzt und vom endseitig benachbarten Abschnitt auf einer gemeinsamen Verbindung großen Datendurchsatzes (110) ein digitales Signal empfängt, das die digitalen Signale der zweiten Multiplexer aller endseitig folgenden Abschnitte enthält, worauf die aus dem ersten Multiplexer empfangenen digitalen Signale diesem Signal hinzugefügt werden und das so erhaltene Signal zum schlepperseitig benachbarten Abschnitt übertragen wird.

2. Abschnitt nach Anspruch 1, dadurch gekennzeichnet, daß die Verbindungen zwischen den Verarbeitungs- und Digitalisierungsmoduln (206) und dem Synchronisationsmodul (204) bzw. dem ersten Multiplexer (203) auf Koaxialkabeln verlaufen.

3. Abschnitt nach Anspruch 2, dadurch gekennzeichnet, daß die Speisung der Verarbeitungs- und Digitalisierungsmoduln (206) und der Multiplexer (203, 109) über Koaxialkabel verläuft, die Datensignale und einen Versorgungs-Gleichstrom übertragen.

4. Abschnitt nach einem beliebigen der Ansprüche 1 bis 3, dadurch gekennzeichnet, daß er Mittel (403), um ein Fernsteuersignal zu speichern, das über die Übertragungsleitung zwischen dem vorderen und dem hinteren Halbübergang (106) übertragen wurde und die Nummer des Abschnitts in der Gesamtheit der die lineare Antenne bildenden Abschnitte angibt, sowie Mittel (405) aufweist, um die digitalisierten Daten aus dem ersten Multiplexer (203) auf die Verbindung mit großem Datendurchsatz (110) in Form eines Pakets von binären Wörtern hinter der Gesamtheit der anderen Pakete von binären Wörtern (j-1, ..., 1) entsprechend allen zum Ende der linearen Antenne folgenden Abschnitte zu übertragen.

5. Lineare akustische Antenne, dadurch gekennzeichnet, daß sie aus einer Folge von Abschnitten (101) gemäß einem beliebigen der Ansprüche 1 bis 4 gebildet wird, wobei diese Abschnitte einander gleichen und stirnseitig aneinandergefügt sind.

## Claims

1. Section for linear acoustic antenna, of the type comprising a casing terminating at its two ends in an upstream semi-junction and a downstream semi-junction, an assembly of hydrophones distributed inside this casing along the section, a transmission line (106) for transmitting between the upstream semi-junction and the downstream semi-junction a first synchronization and remote-control signal directed towards the tail of the antenna, a synchronization module (204) situated in the semi-junction in order to deliver a set of internal synchronization signals to the section;
- an assembly of processing and digitizing modules (206) distributed regularly inside the casing over the length of the section in order to process (303-305) and digitize (306) the signals from at least one hydrophone (301) under the control of one of the internal synchronization signals of the module,
characterized in that the synchronization module (204) is situated in the downstream semi-junction in order to receive from the adjacent downstream section of the antenna a second synchronization signal ascending from the tail of this antenna, and in order to supply the members of the section with electrical energy from an electric current originating from the hauling boat by way of the upstream semi-junction, and in that the section furthermore comprises:
- a first multiplexer (203) situated in the upstream semi-junction in order to multiplex the digital signals (307) delivered by the processing and digitizing modules (206) and to send to the adjacent upstream section a signal which will form the second synchronization signal for this upstream section; and
- a second multiplexer (109) situated in the upstream semi-junction in order to receive from the adjacent downstream section, over a single high-speed link (110), a digital signal comprising the digital signals from the second multiplexers of all the downstream sections, in order to append to this signal the digital signals received from the first multiplexer and in order to send the signal thus obtained to the upstream section.

2. Section according to Claim 1, characterized in that the links between the processing and digitizing modules (206) and the synchronization module (204) and the first multiplexer (203) respectively are effected with coaxial cables.

3. Section according to Claim 2, characterized in that the supply to the processing and digitizing modules (206), and to the multiplexers (203, 109), is effected by way of said coaxial cables which carry the data signals and a DC supply current.

4. Section according to any one of Claims 1 to 3, characterized in that it comprises means (403) for storing a remote-control signal transmitted by way of the said transmission lines between the upstream semi-junction and the downstream semi-junction (106) indicating the number of the section in the assembly of sections forming the linear antenna, and means (405) for transmitting the digitized data originating from the first multiplexer (203) over the high-speed link (110) in the form of a packet of binary words which follows a set of other packets of binary words (J1-J-1) corresponding to each of the downstream sections of the linear antenna.

5. Linear acoustic antenna, characterized in that it is formed of an assembly of sections (101) according to any one of Claims 1 to 4, and which are identical to one another and are placed tip to tip.
